# EUROPEAN PATENT SPECIFICATION

(11) **EP 3 680 743 B1**
(45) Date of publication and mention of the grant of the patent: **06.04.2022**
(21) Application number: 18854019.9
(22) Date of filing: 22.08.2018
(51) Int. Cl.: G05D 1/02, A47L 9/28

(54) **AUTONOMOUSLY TRAVELING CLEANER AND MAP CORRECTION AND DISPLAY METHOD**
AUTONOM REINIGUNGSROBOT UND VERFAHREN ZUR KORREKTUR UND DARSTELLUNG VON KARTEN
DISPOSITIF DE NETTOYAGE À DÉPLACEMENT AUTONOME ET PROCÉDÉ DE CORRECTION ET D'AFFICHAGE DE CARTE

(30) Priority: 06.09.2017 JP 2017171510
(43) Date of publication of application: 15.07.2020
(73) Proprietor: Panasonic Intellectual Property Management Co., Ltd., Osaka-shi, Osaka 540-6207 (JP)
(72) Inventor: SHINOMOTO, Yuki, Osaka-shi, Osaka 540-6207 (JP); MAEDA, Shigenori, Osaka-shi, Osaka 540-6207 (JP); NAKAMURA, Tomonori, Osaka-shi, Osaka 540-6207 (JP); AMANO, Katsushige, Osaka-shi, Osaka 540-6207 (JP); ASAI, Koji, Osaka-shi, Osaka 540-6207 (JP)
(74) Representative: SSM Sandmair
(86) International application number: PCT/JP2018/030885
(87) International publication number: WO 2019/049657

(56) References cited:
- WO-A1-2014/189482
- WO-A1-2017/141536
- JP-A- 2007 310 198
- JP-A- 2014 219 723
- US-A1- 2006 293 810

## Description

### TECHNICAL FIELD

The present invention relates to an autonomously traveling cleaner that generates a map based on a traveling record, and a map correction method.

### BACKGROUND ART

In a case of a conventional autonomously traveling cleaner without a sensor that acquires external information such as a camera, it is impossible to determine where on a map the autonomously traveling cleaner is located at a beginning of cleaning.

In recent years, an autonomously traveling cleaner has been proposed which determines a position through a utilization of the autonomously traveling cleaner standing by while being charged on a charging stand when being not in use (for example, see PTL 1). Specifically, using the position of the charging stand as a starting point, a cleaning record of the autonomously traveling cleaner is recorded. A map is then generated based on recorded information and the position of the autonomously traveling cleaner is determined.

However, in a case where the autonomously traveling cleaner described in PTL 1 performs cleaning while repeatedly traveling back and forth using the charging stand as a starting point, at least either a map that is inclined as a whole, or a map that is displaced in parallel may be generated.

### Citation List

### Patent Literature

PTL 1: Unexamined Japanese Patent Publication No. 2006-110322

US 2006/0293810 A1 discloses a mobile robot and a method for calculating position and posture thereof in which a map data memory stores map data of a movement region, position data of a marker at a predetermined place in the movement region, identification data of the marker, and position data of a boundary line near the marker in the movement region. A marker detection unit detects the marker in an image, based on the position data of the marker and the identification data. A boundary line detection unit detects the boundary line near the marker from the image. A parameter calculation unit calculates a parameter of the boundary line in the image. A position posture calculation unit calculates a position and a posture of the mobile robot in the movement region, based on the parameter and the position data of the boundary line.

WO 2014/189482 A1 discloses various embodiments that are generally directed to techniques to merge a virtual map derived from sensors of computing devices moved about an interior of a structure with a corresponding physical map. An apparatus to merge maps includes a processor component; and a merged map generator for execution by the processor component to merge a virtual map and a physical map to generate a merged map, the virtual map comprising indications of virtual pathways through an interior of a structure based on sensors, and the physical map comprising indications of physical pathways of the interior. Other embodiments are described and claimed.

### SUMMARY OF THE INVENTION

An autonomously traveling cleaner as an example of the present invention includes a map generator that generates, based on a traveling record of the autonomously traveling cleaner, a past map using a position of a reference member installed in an area to be cleaned as a reference position, and a new map after the past map is generated. Moreover, the autonomously traveling cleaner includes a longest-straight-line determination unit that determines a longest-straight-line component that is longest among straight-line components included in each of the past map and the new map, and a map arrangement unit that rotates at least the new map to arrange the longest-straight-line component included in each of the past map and the new map to be matched with or parallel to a predetermined axis.

A map correction method of an autonomously traveling cleaner as another example of the present invention includes, in a map generator, based on a traveling record, generating a past map using a position of a reference member installed in an area to be cleaned as a reference position, and a new map after the past map is generated. Moreover, in a longest-straight-line determination unit, a longest-straight-line component is determined that is longest among straight-line components included in each of the past map and the new map. Then, in a map arrangement unit, at least the new map is rotated and arranged and the longest-straight-line component included in each of the past map and the new map is caused to be matched with or parallel to a predetermined axis.

Note that execution of a program that causes a computer to perform each processing included in the map correction method described above also corresponds to implementation of the present invention. Of course, implementation of a recording medium in which the program is stored also corresponds to the implementation of the present invention.

According to these configurations, even in a case where a map is generated while being inclined, a map in a correct posture can be generated through causing a new map to extend along a predetermined axis. This can provide an autonomously traveling cleaner capable of efficiently cleaning an area to be cleaned based on a more accurate map, and a map correction method.

### BRIEF DESCRIPTION OF DRAWINGS

FIG. 1 is a plan view showing an appearance of an autonomously traveling cleaner according to an exemplary embodiment.
FIG. 2 is a bottom view showing the appearance of the autonomously traveling cleaner.
FIG. 3 is a perspective view showing the appearance of the autonomously traveling cleaner.
FIG. 4 is a block diagram showing a functional unit related to map generation in a control unit according to the exemplary embodiment.
FIG. 5 is a plan view showing an area to be cleaned according to the exemplary embodiment.
FIG. 6 is a view showing a past map according to the exemplary embodiment.
FIG. 7 is a view showing a new map according to the exemplary embodiment.
FIG. 8 is a view showing a state in which the new map and past map are superimposed on each other after reference positions are matched with each other according to the exemplary embodiment.
FIG. 9 is a view showing a state in which the new map and past map are superimposed on each other to obtain a minimum difference according to the exemplary embodiment.
FIG. 10 is a flowchart showing a method for correcting a displacement of reference positions in a control unit.

### DESCRIPTION OF EMBODIMENT

Hereinafter, an exemplary embodiment of an autonomously traveling cleaner and a map correction method according to the present invention will be described with reference to the accompanying drawings. Note that the following exemplary embodiment merely shows an example of the autonomously traveling cleaner and the map correction method according to the present invention. Therefore, the scope of the present invention is defined by the description in the scope of the claims with reference to the following exemplary embodiment, and is not limited to the following exemplary embodiment. Accordingly, among the constituents in the following exemplary embodiment, constituents which are not recited in the independent claims for the most generic concept of the present invention are not absolutely necessary for achieving the task of the present invention, but are described as constituents of a more preferred embodiment.

Moreover, the drawings are schematic drawings, in which exaggeration, omission, or ratio adjustment is appropriately performed to show the present invention, and the shapes, positional relations or ratio may differ from the actual ones.

### (Exemplary embodiment)

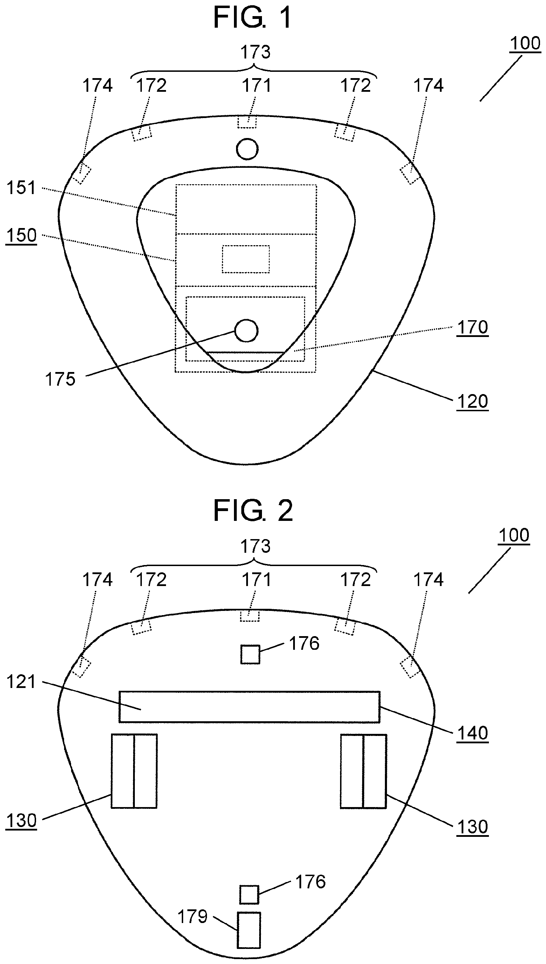

With reference to FIGS. 1 to 3, the following will describe a configuration of an autonomously traveling cleaner according to an exemplary embodiment.

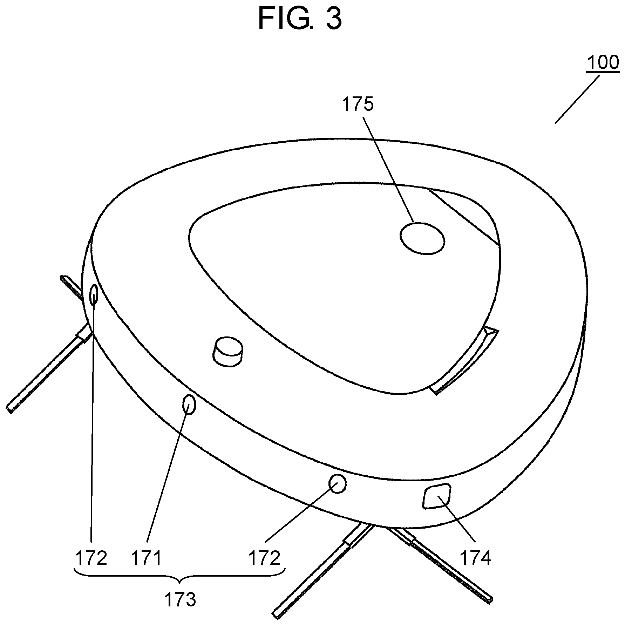

FIG. 1 is a plan view showing an appearance of the autonomously traveling cleaner according to the exemplary embodiment. FIG. 2 is a bottom view showing the appearance of the autonomously traveling cleaner. FIG. 3 is a perspective view showing the appearance of the autonomously traveling cleaner. Note that autonomously traveling cleaner 100 is a robot cleaner that autonomously travels in an area to be cleaned such as a floor surface at home and draws in dirt and dust existing in the area to be cleaned. Autonomously traveling cleaner 100 having a flat surface of a Reuleaux triangle is exemplified.

As shown in FIGS. 1 to 3, autonomously traveling cleaner 100 according to the present exemplary embodiment includes body 120, drive units 130, cleaning unit 140, suction unit 150, control unit 170, and various sensors described later. Body 120 is mounted with various component elements of autonomously traveling cleaner 100. Drive units 130 move body 120 in the area to be cleaned. Cleaning unit 140 collects dirt and dust existing in the area to be cleaned. Suction unit 150 draws in the dirt and dust collected in cleaning unit 140 into body 120. Control unit 170 controls drive units 130, cleaning unit 140, suction unit 150, and the like.

Body 120 constitutes a housing that stores drive units 130, control unit 170, and the like. Body 120 includes a lower body and an upper body, and the upper body is configured to be detachable from the lower body. Body 120 includes a bumper that can be provided in a displaceable manner with respect to body 120 on an outer periphery. In addition, as shown in FIG. 2, body 120 includes suction port 121 for drawing dirt and dust into body 120.

Drive units 130 cause autonomously traveling cleaner 100 to travel in the area to be cleaned based on an instruction from control unit 170. In the present exemplary embodiment, drive units 130 each are arranged on a left side and a right side relative to a center of body 120 in a width direction in a plan view. Note that a number of drive units 130 is not limited to two, and may be one, or equal to or more than three.

Drive units 130 each include a wheel that travels on a surface to be cleaned, a traveling motor that gives torque to the wheel, and a housing that stores the traveling motor. The wheel is stored in a recess formed on a lower surface of body 120, and attached rotatably to body 120.

Moreover, autonomously traveling cleaner 100 is configured of an opposite two-wheel driving system that includes caster 179 as an auxiliary wheel. Since a rotation of two wheels is independently controlled, autonomously traveling cleaner 100 can perform free traveling such as going straight, moving back, and rotating clockwise and counterclockwise.

Cleaning unit 140 constitutes a unit that causes dirt and dust to be drawn in from suction port 121. Cleaning unit 140 includes a main brush disposed inside suction port 121, a brush drive motor that causes the main brush to rotate, and the like.

Suction unit 150 is disposed inside body 120. Suction unit 150 includes a fan case, an electric fan disposed inside the fan case, and the like. The electric fan draws in air inside dust box unit 151 and exhausts the air to an outside of body 120. In this way, dirt and dust are drawn in from suction port 121 and stored inside dust box unit 151.

Moreover, as described above, autonomously traveling cleaner 100 includes various sensors exemplified below such as obstacle sensor 173, distance measuring sensors 174, a collision sensor (not shown), camera 175, floor surface sensors 176, an acceleration sensor (not shown), and an angular velocity sensor (not shown).

Obstacle sensor 173 is a sensor that detects an obstacle that exists in front of body 120. In the case of the present exemplary embodiment, as obstacle sensor 173, for example, an ultrasonic sensor is used. Obstacle sensor 173 includes transmitter 171 and receivers 172. Transmitter 171 is disposed at a front center of body 120 and transmits ultrasonic waves frontward. Receivers 172 each are disposed on both sides of transmitter 171 and receive the ultrasonic waves transmitted from transmitter 171. This means that obstacle sensor 173 receives, in receivers 172, reflected waves of the ultrasonic waves that have been transmitted from transmitter 171 and returned after being reflected by an obstacle. In this way, obstacle sensor 173 detects a distance from the obstacle and a position of the obstacle.

Distance measuring sensor 174 is a sensor that detects a distance between an object such as the obstacle existing around body 120 and body 120. In the case of the present exemplary embodiment, distance measuring sensor 174 is composed of, for example, an infrared sensor that includes a light emitter and a light receiver. This means that distance measuring sensor 174 measures the distance from the obstacle based on a period of time that has passed since an infrared ray has been emitted from the light emitter until the infrared ray reflected by the obstacle has returned and been received by the light receiver.

Specifically, distance measuring sensors 174 each are disposed, for example, in a right front apex portion and left front apex portion. Distance measuring sensor 174 on the right side outputs light (infrared ray) in a diagonally right frontward direction of body 120, and distance measuring sensor 174 on the left side outputs light in a diagonally left frontward direction of body 120. According to this configuration, when autonomously traveling cleaner 100 turns, distance measuring sensors 174 detect the distance between a peripheral object that comes closest to a contour of body 120, and body 120.

The collision sensor is composed of, for example, a switch contact displacement sensor and is provided on the bumper that is disposed on the periphery of body 120. The switch contact displacement sensor is turned on when an obstacle comes into contact with the bumper and the bumper is pushed into body 120. In this way, the collision sensor detects the contact with the obstacle.

Camera 175 is a device that photographs an entire periphery image of an upper space of body 120. The image photographed by camera 175 is processed in an image recognition processor. Through this processing, the current position of autonomously traveling cleaner 100 can be obtained from the position of a feature point in the image.

Floor surface sensors 176 are disposed in a plurality of locations on a bottom surface of body 120 and detect whether an area to be cleaned, for example, a floor surface, exists. In the case of the present exemplary embodiment, floor surface sensor 176 is composed of, for example, an infrared sensor that includes a light emitter and a light receiver. That is, floor surface sensor 176 detects "a floor surface existing" when light (infrared ray) emitted from the light emitter returns and is received by the light receiver. On the other hand, floor surface sensor 176 detects "no floor surface existing" when the receiver receives only light less than or equal to a threshold.

Drive unit 130 further includes an encoder. The encoder detects a rotation angle of each of a pair of wheels that are rotated by the traveling motor. According to information from the encoder, a traveling amount, a turning angle, a speed, acceleration, an angular velocity, and the like of autonomously traveling cleaner 100 are calculated.

The acceleration sensor detects the acceleration when autonomously traveling cleaner 100 travels. The angular velocity sensor detects the angular velocity when autonomously traveling cleaner 100 turns. The information detected by the acceleration sensor and angular velocity sensor is used, for example, for information for correcting an error generated due to idling of the wheel.

Note that obstacle sensor 173, distance measuring sensor 174, the collision sensor, camera 175, floor surface sensor 176, the encoder, and the like described above are examples of a sensor. Therefore, autonomously traveling cleaner 100 need not include all of the sensors. Alternatively, autonomously traveling cleaner 100 may include a sensor that is different in form from the ones described above.

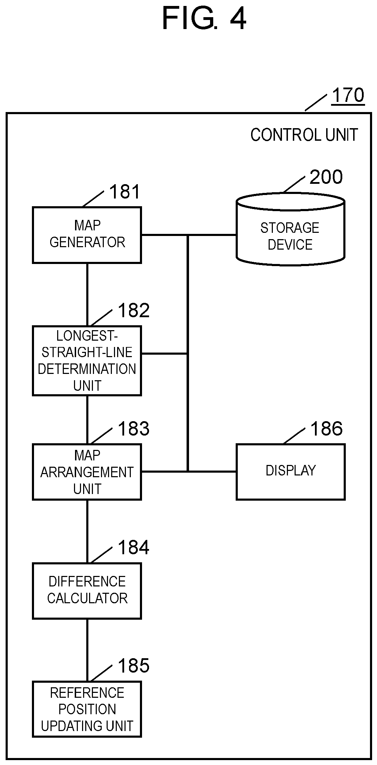

Control unit 170 include at least one of storage device 200 (see FIG. 4), a processor, and a hardware circuit. The processor executes predetermined processing according to an instruction included in a program stored in storage device 200. The hardware circuit executes each processing. At this time, the hardware circuit is composed of a circuit that includes at least one of a digital circuit and an analogue circuit. Control unit 170 is connected to various sensors such as obstacle sensor 173, distance measuring sensor 174, the collision sensor, camera 175, floor surface sensor 176 described above.

Moreover, control unit 170 is connected to each driving source such as the traveling motor, the brush drive motor, and the electric fan. Control unit 170 then controls, for example, a rotation of the driving source that is connected to control unit 170 based on information from various sensors.

Moreover, control unit 170 causes autonomously traveling cleaner 100 to travel so as to clean the entire area to be cleaned as efficiently as possible according to a cleaning program stored in storage device 200.

Autonomously traveling cleaner 100 according to the exemplary embodiment is configured as described above.

An operation of a functional unit related to map generation in control unit 170 described above will be described below with reference to FIGS. 4 to 7.

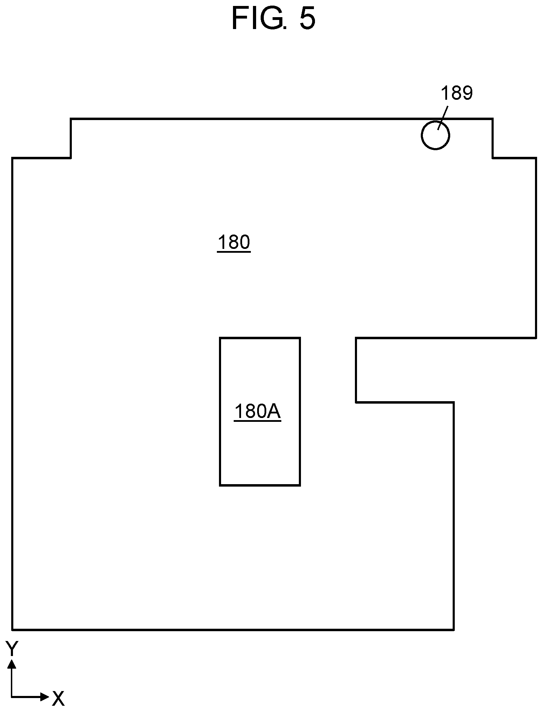

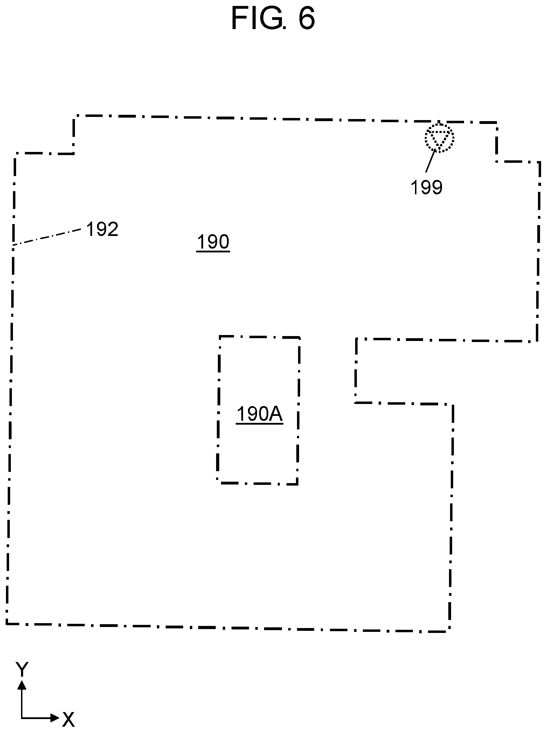

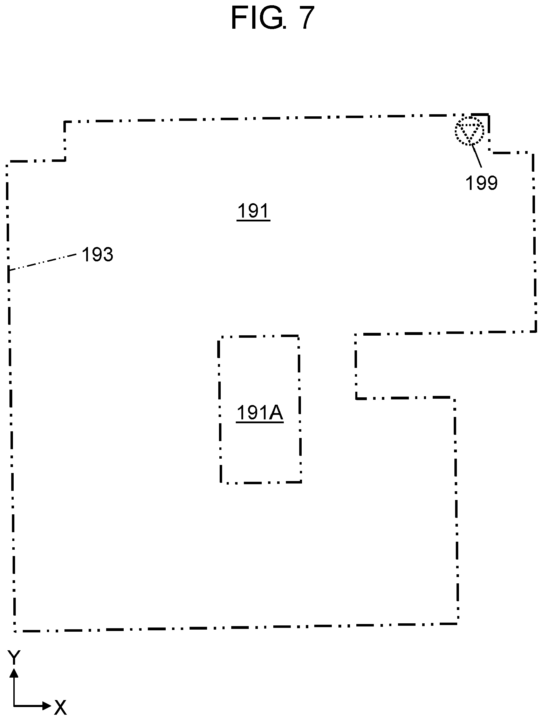

FIG. 4 is a block diagram showing a functional unit related to map generation in control unit 170 according to the exemplary embodiment. FIG. 5 is a plan view showing area to be cleaned 180. FIG. 6 is a view showing past map 190. FIG. 7 is a view showing new map 191.

As shown in FIG. 4, control unit 170 of autonomously traveling cleaner 100 includes storage device 200, map generator 181 that functions as a processing unit, longest-straight-line determination unit 182, map arrangement unit 183, difference calculator 184, reference position updating unit 185, and the like. Control unit 170 of the present exemplary embodiment further includes display 186.

Map generator 181 is a processing unit that generated, based on a traveling record of autonomously traveling cleaner 100, a map using the position of reference member 189 installed in area to be cleaned 180 shown in FIG. 5 as a reference position. Here, area to be cleaned 180 is an area in which autonomously traveling cleaner 100 can travel. That is, in general, as shown in FIG. 5, area to be cleaned 180 is approximated, for example, in a shape of a floor surface of a room. Reference member 189 is a member such as a device that serves as a reference position when autonomously traveling cleaner 100 autonomously travels. Reference member 189 is not particularly limited, and a charging stand that charges a battery included in autonomously traveling cleaner 100 with supplied power serves as reference member 189. The traveling record is, for example, based on a traveling program, a trajectory of autonomously traveling cleaner 100 from a start of traveling of autonomously traveling cleaner 100 using reference member 189 as a starting point until an end of cleaning, for example, when entire area to be cleaned 180 is considered to be cleaned. This means that the traveling record need not necessarily be a trajectory of cleaning of entire area to be cleaned 180.

Based on the traveling record within area to be cleaned 180 shown in FIG. 5, map generator 181 generates, as a past map and a new map, an outer shape of an area of actual traveling and information that indicates reference positions 199, which are positions in which reference member 189 shown in FIG. 6 and reference member 189 shown in FIG. 7 have been disposed, and stores the maps in storage device 200 of control unit 170.

Specifically, map generator 181 stores a map that has been generated based on the traveling record of traveling of autonomously traveling cleaner 100 for a first time or last time as, for example, a past map in storage device 200 of control unit 170.

Map generator 181 then holds a map that has been generated based on the traveling record of traveling of autonomously traveling cleaner 100, for example, next time as, for example, a new map in storage device 200.

At this time, as shown in FIG. 5, when island area 180A, in which traveling is impossible, exists in area to be cleaned 180, as shown in FIGS. 6 and 7, map generator 181 generates a map that includes information that indicates outer shapes and positions of island areas 190A, 191A.

In the case of the present exemplary embodiment, the map generated by map generator 181 is achieved as, for example, two-dimensional arrangement data. Specifically, map generator 181 divides a traveling result of autonomously traveling cleaner 100 into, for example, squares of a predetermined size of, for example, 10 cm in length and width. Map generator 181 then regards each of the squares as one element of an arrangement that constitutes the map, and stores the squares as arrangement data in storage device 200. Note that a specific data format to be stored is not particularly limited. For example, as a value of each element, numerical values may be stored such as "0" for a part where traveling is impossible such as a wall, "1" for a floor surface where traveling is possible, and "2" for reference member 189. Other than above, as a value of each element, the amount of dirt and dust that has been cleaned, the position where autonomously traveling cleaner 100 has stopped, and the like may be stored in storage device 200 as additional information.

Longest-straight-line determination unit 182 is a processing unit that determines a longest-straight-line component among straight-line components included in the map generated by map generator 181. Here, the longest-straight-line component means the longest straight line included in a peripheral edge of the map among all lines included in the map. At this time, when a line whose length is close to the length of the longest straight line within a range of error in some degree, longest-straight-line determination unit 182 may determine the line whose component inclination is closest to an X-axis or a Y-axis as the longest-straight-line component. Specifically, as shown in FIGS. 6 and 7, longest-straight-line determination unit 182 determines inclined lines that are closest to the Y-axis as longest-straight-line components 192, 193.

As described above, based on the traveling record of traveling of autonomously traveling cleaner 100, maps such as past map 190 and new map 191 are generated.

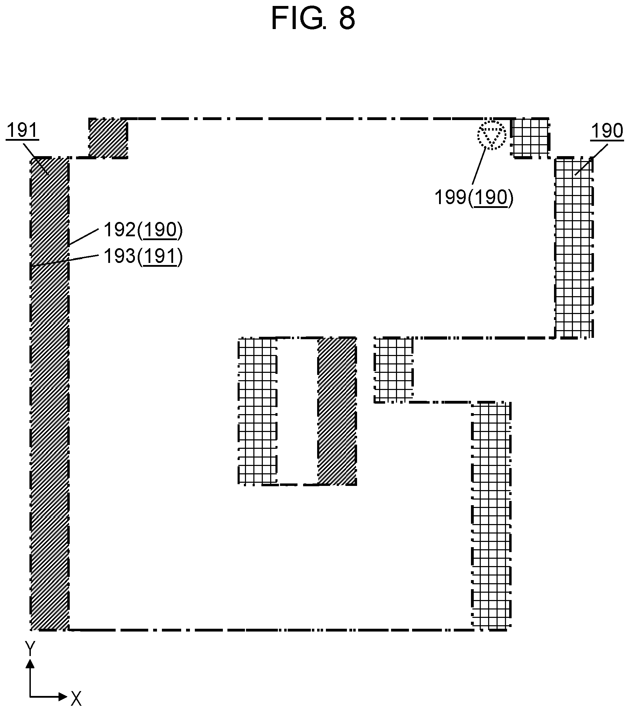

Correction of a displacement between past map 190 and new map 191 generated as described above will be described below with reference to FIG. 8.

FIG. 8 is a view showing a state in which new map 191 and past map 190 are superimposed on each other after the reference positions are matched with each other.

First, map arrangement unit 183 causes reference position 199 included in new map 191 shown in FIG. 7, which has been newly generated by map generator 181, to be matched with reference position 199 included in past map 190 shown in FIG. 6, which has been generated before new map 191 has been generated and has been stored in storage device 200. At the same time, map arrangement unit 183 disposes longest-straight-line component 193 included in new map 191 shown in FIG. 7 and longest-straight-line component 192 included in past map 190 shown in FIG. 6 to be superimposed on each other and disposed in parallel or in one straight line. As a result, as shown in FIG. 8, new map 191 and past map 190 are superimposed on each other.

Note that the processing, in which reference position 199 of new map 191 is superimposed on past map 190 and new map 191 is rotated around reference position 199, is executed by, for example, an affine transformation of a matrix. The affine transformation of a matrix described above is an example of processing for rotating a map.

Here, past map 190 shown in FIG. 6 may be a map that has been generated in the past, or may be a map obtained by, for example, statistical processing of a plurality of maps that have been generated in the past. Note that the map that has been generated first among past maps 190 is arranged such that the longest-straight-line component extends along a predetermined axis (X-axis or Y-axis). Therefore, past maps 190 and new map 191 are all generated such that the longest-straight-line components thereof extend along the predetermined axis.

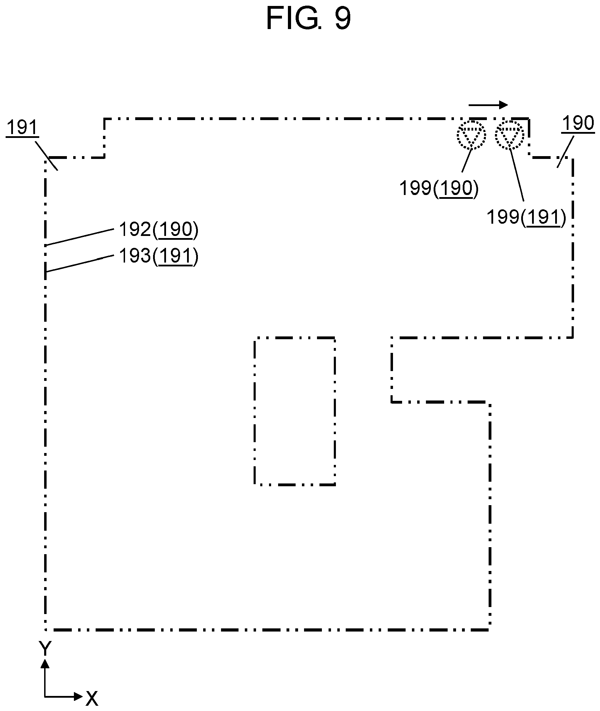

In the case of the present exemplary embodiment, however, as shown in FIGS. 6 and 7, the map generated by map generator 181 may be generated while being inclined in some degree as an error. Therefore, as shown in FIG. 8, map arrangement unit 183 arranges longest-straight-line component 192 of past map 190 and longest-straight-line component 193 of new map 191, each of which is inclined at a different angle, such that longest-straight-line component 192 and longest-straight-line component 193 each extend along the Y-axis. Past map 190 and new map 191 are then moved in parallel such that reference positions 199 of past map 190 and new map 191 are matched with each other. As a result, as described below with reference to FIG. 9, past map 190 and new map 191 are superimposed on each other such that longest-straight-line component 192 of past map 190 and longest-straight-line component 193 of new map 191 are arranged in parallel, and thus the difference between the maps is minimized.

FIG. 9 is a view showing a state in which new map 191 and past map 190 are superimposed on each other such that the difference is minimized.

Specifically, difference calculator 184 first causes parallel movement of new map 191 arranged in map arrangement unit 183 relative to past map 190 one or more times. Difference calculator 184 then calculates the difference between the maps every time the parallel movement is performed. Here, the difference between the maps is parts that do not overlap each other when new map 191 and past map 190 are superimposed on each other. That is, the difference between the maps corresponds to hatched parts shown in FIG. 8.

In the case of the present exemplary embodiment, difference calculator 184 causes parallel movement of new map 191 at predetermined intervals of, for example, 10 cm or the like, with respect to past map 190 in the X-axis direction and the Y-axis direction one or more times. Difference calculator 184 then calculates the difference between the maps every time the movement is performed. At this time, a threshold of the number of times for calculating the difference may be determined as, for example, up until a fixed number of times without exception. Moreover, when the difference that is continuously obtained a plurality of times constantly increases, the calculation of the difference may be ended at this point.

Next, reference position updating unit 185 updates a reference position of a map to be generated next time based on a positional relation of reference position 199 of new map 191 with respect to reference position 199 of past map 190, from which a minimum difference is obtained among the differences calculated by difference calculator 184. At this time, in a case where one or a plurality of differences that are close to the minimum difference exist within a range of error in some degree, it is preferable to update the reference position using, among these differences, the reference position whose traveling amount is minimum as the reference position of the map to be generated next time. Accordingly, in area to be cleaned 180, even in a case where reference member 189 is moved, a new map can be appropriately generated. In FIG. 9, an example is shown in which reference position 199 is displaced in the X-axis direction only. However, the displacement of reference position 199 is not limited to this. Normally, reference position 199 is displaced in at least one of the X-axis and Y-axis directions. Therefore, reference position updating unit 185 updates a coordinate of the reference position based on the displacements in the X-axis and Y-axis directions. In this way, the displacements between the respective maps can be more accurately corrected.

Moreover, display 186 of control unit 170 is a processing unit that adjusts an inclination of a map such that the longest-straight-line component determined by longest-straight-line determination unit 182 is parallel to a long side of a displayed image, and displays the map on a display device. Autonomously traveling cleaner 100 of the present exemplary embodiment is configured to be capable of communicating with a terminal device such as a smartphone via a communication unit. Therefore, display 186 sends, to the terminal device, a map whose direction corresponds to an aspect ratio of the terminal device via the communication unit, and causes the display device to display the map. The map whose direction corresponds to an aspect ratio is a map whose inclination has been adjusted such that the longest-straight-line component of the map is parallel to the long side of the display of the terminal device. As a result, the entire map can be displayed in a large size on, for example, a liquid crystal screen of a smartphone, which is the display of the terminal device. Therefore, a user who operates the terminal device can accurately specify the area to be cleaned via the map that is displayed in a size as large as possible.

In the manner as thus described, the displacement between past map 190 and new map 191 is corrected and can be recognized by the user.

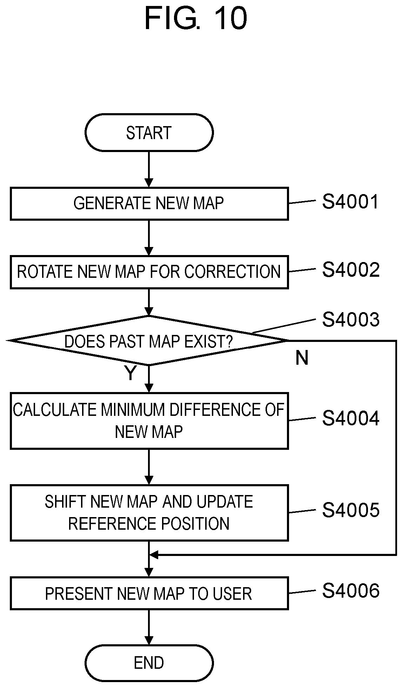

A method for correcting a displacement of reference positions in control unit 170 of autonomously traveling cleaner 100 will be described below with reference to FIG. 10. Note that processing such as correction of a displacement of reference positions is achieved through execution of a predetermined program by a processor in control unit 170. Alternatively, processing such as correction of a displacement of reference positions may be achieved by a hardware circuit.

FIG. 10 is a flowchart showing a method for correcting a displacement of reference positions in control unit 170.

As shown in FIG. 10, first, autonomously traveling cleaner 100 moves from reference position 199 such as a charging stand to a location in area to be cleaned 180 and starts cleaning. At this time, while performing cleaning, autonomously traveling cleaner 100 collects information in area to be cleaned 180 via various sensors and returns to reference position 199. Map generator 181 then generates new map 191 based on the collected information (step S4001). In this case, a configuration may also be adopted in which a part of the map is sequentially generated while autonomously traveling cleaner 100 is performing cleaning.

Next, longest-straight-line determination unit 182 determines longest-straight-line component 193 from new map 191 thus generated.

Next, map arrangement unit 183 superimposes reference positions 199 on each other, and rotates new map 191 for correction such that longest-straight-line component 193 is matched with or in parallel to the X-axis or Y-axis (step S4002). Note that in a case where a map is generated as new map 191 for the first time, map arrangement unit 183 rotates the longest-straight-line component of the map so as to extend along a predetermined axis (X-axis or Y-axis).

Next, map generator 181 determines whether past map 190 is stored in storage device 200 (step S4003). At this time, in a case where past map 190 is not stored in storage device 200 (N in step S4003), the map generated in map generator 181 is displayed as new map 191 on a display device such as a terminal device and presented to the user (step S4006). Then, the processing for correcting the displacement of the reference positions ends.

On the other hand, in a case where past map 190 is stored in storage device 200 (Y in step S4003), difference calculator 184 shifts new map 191 with respect to past map 190 in stages to describe a rectangular spiral at a predetermined interval. Note that to describe a rectangular spiral means to change the amounts of shift in the X-axis direction and Y-axis direction to describe a spiral from the reference position. In this way, the difference can be confirmed from a range as close as possible to the reference position. At this time, difference calculator 184 calculates the minimum difference by calculating the difference for each shift in one phase and then comparing the differences with each other. The positional relation of new map 191 with respect to past map 190, from which the minimum difference is obtained, is calculated as a shift vector (step S4004).

Next, reference position updating unit 185 shifts new map 191 based on the calculated shift vector and updates reference position 199 (step S4005).

Display 186 then sends the map, in which reference position 199 has been updated, to a portable terminal possessed by the user. At this time, display 186 creates an image that displays the map such that the longest-straight-line component extends along the long side of the display of the portable terminal possessed by the user and sends the image to the portable terminal.

In this way, the displacement of the reference positions is corrected in control unit 170 of autonomously traveling cleaner 100.

As described above, according to autonomously traveling cleaner 100 of the present exemplary embodiment, in a case where an arrangement of reference member 189 such as a charging stand is changed, the change of the reference position 199 is recognized from an entire shape of new map 191 and past map 190. Based on the recognized change of reference position 199, the reference position is updated to a correct reference position. In this way, autonomously traveling cleaner 100 can always obtain an arrangement relation between reference member 189 and area to be cleaned 180 in a correct state. As a result, even when a map is generated while being inclined, through correction of new map 191 along a predetermined axis (X-axis or Y-axis), area to be cleaned 180 can be more reliably cleaned.

For example, in the above description, the configuration of autonomously traveling cleaner 100 having a flat surface of a Reuleaux triangle is exemplified. However, the present invention is not limited this shape. The shape of autonomously traveling cleaner 100 may adopt an arbitrary shape such as a circular shape or a rectangular shape, and a similar or identical effect can be achieved.

### INDUSTRIAL APPLICABILITY

The present invention is useful for an autonomously traveling cleaner or the like which is required to display a cleaning result and have a function to more accurately specify an area to be cleaned. Moreover, the present invention is applicable to a use such as a robot for home use.

### REFERENCE MARKS IN THE DRAWINGS

- 100: autonomously traveling cleaner
- 120: body
- 121: suction port
- 130: drive unit
- 140: cleaning unit
- 150: suction unit
- 151: dust box unit
- 170: control unit
- 171: transmitter
- 172: receiver
- 173: obstacle sensor
- 174: distance measuring sensor
- 175: camera
- 176: floor surface sensor
- 179: caster
- 180: area to be cleaned
- 180A, 190A, 191A: area
- 181: map generator
- 182: longest-straight-line determination unit
- 183: map arrangement unit
- 184: difference calculator
- 185: reference position updating unit
- 186: display
- 189: reference member
- 190: past map
- 191: new map
- 192: longest-straight-line component
- 193: longest-straight-line component
- 199: reference position
- 200: storage device

## Claims

1. An autonomously traveling cleaner for autonomously travelling and performing cleaning, the autonomously traveling cleaner comprising:
a map generator adapted to generate based on a traveling record of the autonomously traveling cleaner and using a position of a reference member installed in an area to be cleaned as a reference position, a past map and a new map after the past map is generated;
a longest-straight-line determination unit adapted to determine a longest-straight-line component that is longest among straight-line components included in each of the past map and the new map; and
a map arrangement unit adapted to rotate at least the new map to arrange the longest-straight-line component included in each of the past map and the new map to be parallel to each other or a predetermined axis,
**characterized by**
a processing unit programmed to adjust an inclination of the new map defined as an inclination of the longest-straight-line component relative to the X-axis or Y-axis to cause the longest-straight-line component determined by the longest-straight-line determination unit to be parallel to a longer side of an image of the new map to be displayed on a display device of a terminal device communicating with the autonomously traveling cleaner.

2. The autonomously traveling cleaner according to claim 1, wherein
the map arrangement unit causes the reference position included in the past map to be superimposed on the new map, and using the longest-straight-line component included in the past map as the predetermined axis, is further adapted to rotate using an affine transformation, the longest-straight-line component included in the new map to be parallel to the longest-straight-line component included in the past map, and
the autonomously traveling cleaner further comprises:
a difference calculator that causes movement of the rotated new map along the X-axis or Y-axis direction relative to the past map one or more times and is configured to calculate a difference between the new map and the past map every time the movement is performed; and
a reference position updating unit that is adapted to update the reference position of the new map based on a positional relation of the reference position of the new map with respect to the reference position of the past map that has provided a minimum difference among differences calculated in the difference calculator.

3. A map correction method for an autonomously traveling cleaner adapted to autonomously travel and perform cleaning, the map correction method comprising:
in a map generator, based on a traveling record and using a position of a reference member installed in an area to be cleaned as a reference position, generating a past map and a new map after the past map is generated;
in a longest-straight-line determination unit, determining a longest-straight-line component that is longest among straight-line components included in each of the past map and the new map; and
in a map arrangement unit, rotating and arranging at least the new map and causing the longest-straight-line component included in each of the past map and the new map to be parallel to each other or a predetermined axis,
**characterized by**
adjusting, in a processing unit, an inclination of the new map using a position of a reference member installed in an area to be cleaned as a reference position to cause the longest-straight-line component determined in the longest-straight-line determination unit to be parallel to a longer side of an image of the new map to be displayed on a display device of a terminal device communicating with the autonomously traveling cleaner.

## Patentansprüche

1. Autonom fahrender Reiniger zum autonomen Fahren und zur Durchführung von Reinigungsarbeiten, wobei der autonom fahrende Reiniger umfasst:
einen Kartengenerator, der angepasst ist, auf der Grundlage einer Bewegungsaufzeichnung des autonom fahrenden Reinigungsgeräts und unter Verwendung einer Position eines in einem zu reinigenden Bereich installierten Bezugselements als Bezugsposition eine vergangene Karte und eine neue Karte zu erzeugen, nachdem die vergangene Karte erzeugt wurde;
eine Einheit zur Bestimmung der längsten geraden Linie, die angepasst ist, eine Komponente der längsten geraden Linie zu bestimmen, die die längste unter den Komponenten der geraden Linie ist, die in jeder der vergangenen Karte und der neuen Karte enthalten sind; und
eine Kartenanordnungseinheit, die so angepasst ist, dass sie zumindest die neue Karte so dreht, dass die Komponente der längsten geraden Linie, die sowohl in der früheren Karte als auch in der neuen Karte enthalten ist, parallel zueinander oder zu einer vorbestimmten Achse angeordnet wird,
**gekennzeichnet durch**
eine Verarbeitungseinheit, die so programmiert ist, dass sie eine Neigung der neuen Karte, die als eine Neigung der Komponente der längsten geraden Linie relativ zur X-Achse oder Y-Achse definiert ist, einstellt, um zu bewirken, dass die Komponente der längsten geraden Linie, die von der Einheit zur Bestimmung der längsten geraden Linie bestimmt wird, parallel zu einer längeren Seite eines Bildes der neuen Karte ist, die auf einer Anzeigevorrichtung eines Endgeräts, das mit dem autonom fahrenden Reinigungsgerät kommuniziert, angezeigt wird.

2. Autonom fahrende Reiniger nach Anspruch 1, bei dem
die Kartenanordnungseinheit veranlasst, dass die in der vergangenen Karte
enthaltene Bezugsposition der neuen Karte überlagert wird, und unter Verwendung der in der vergangenen Karte enthaltenen längsten geraden Komponente als die vorbestimmte Achse weiterhin angepasst ist, um unter Verwendung einer affinen Transformation die in der neuen Karte enthaltene längste gerade Komponente so zu drehen, dass sie parallel zu der in der vergangenen Karte enthaltenen längsten geraden Komponente ist, und
der autonom fahrende Reiniger umfasst außerdem:
eine Differenzberechnungseinrichtung, die eine Bewegung der gedrehten neuen Karte entlang der X-Achsen- oder Y-Achsen-Richtung relativ zu der vergangenen Karte ein oder mehrere Male bewirkt und so konfiguriert ist, dass sie jedes Mal, wenn die Bewegung durchgeführt wird, eine Differenz zwischen der neuen Karte und der vergangenen Karte berechnet; und
eine Referenzpositions-Aktualisierungseinheit, die so angepasst ist, dass sie die Referenzposition der neuen Karte auf der Grundlage einer Positionsbeziehung der Referenzposition der neuen Karte in Bezug auf die Referenzposition der vergangenen Karte aktualisiert, die eine minimale Differenz unter den in dem Differenzrechner berechneten Differenzen geliefert hat.

3. Kartenkorrekturverfahren für einen autonom fahrenden Reiniger, der sich autonom bewegen und eine Reinigung durchführen kann, wobei das Kartenkorrekturverfahren umfasst:
Erzeugen, in einem Kartengenerator auf der Grundlage eines Fahrtenprotokolls und unter Verwendung einer Position eines in einem zu reinigenden Bereich installierten Bezugselements als Bezugsposition, einer vergangenen Karte und einer neue Karte, nachdem die vergangene Karte erzeugt wurde;
Bestimmen, in einer Einheit zur Bestimmung der längsten geraden Linie, einer Komponente der längsten geraden Linie, die die längste unter den Komponenten der geraden Linie ist, die in jeder der vergangenen Karte und der neuen Karte enthalten sind; und
Drehen und Anordnen, in einer Kartenanordnungseinheit, zumindest der neuen Karte und Bewirken, dass die längste geradlinige Komponente, die sowohl in der früheren Karte als auch in der neuen Karte enthalten ist, parallel zueinander oder zu einer vorgegebenen Achse verläuft,
**gekennzeichnet durch**
Einstellen einer Neigung der neuen Karte in einer Verarbeitungseinheit unter Verwendung einer Position eines in einem zu reinigenden Bereich installierten Bezugselements als Bezugsposition, um zu bewirken, dass die in der Einheit zur Bestimmung der längsten geraden Linie ermittelte Komponente der längsten geraden Linie parallel zu einer längeren Seite eines Bildes der neuen Karte ist, die auf einer Anzeigevorrichtung eines mit dem autonom fahrenden Reinigungsgerät kommunizierenden Endgeräts angezeigt werden soll.

## Revendications

1. Dispositif de nettoyage se déplaçant de façon autonome destiné à se déplacer de façon autonome et réaliser un nettoyage, le dispositif de nettoyage se déplaçant de façon autonome comprenant :
un générateur de carte, adapté pour générer, sur la base d'un historique de déplacement du dispositif de nettoyage se déplaçant de façon autonome et en utilisant une position d'un élément de référence installé dans une zone destinée à être nettoyée en tant que position de référence, une carte ancienne et une carte nouvelle après que la carte ancienne est générée ;
une unité de détermination de ligne droite la plus longue, adaptée pour déterminer une composante de ligne droite la plus longue qui est la plus longue parmi des composantes de ligne droite incluses dans chacune de la carte ancienne et de la carte nouvelle ; et
une unité de gestion de carte, adaptée pour faire tourner au moins la carte nouvelle pour agencer la composante de ligne droite la plus longue incluse dans chacune de la carte ancienne et de la carte nouvelle pour être parallèle à chaque autre ou à un axe prédéterminé,
**caractérisé par**
une unité de traitement programmée pour ajuster une inclinaison de la carte nouvelle définie comme étant une inclinaison de la composante de ligne droite la plus longue relativement à l'axe X ou axe Y pour faire en sorte que la composante de ligne droite la plus longue déterminée par l'unité de détermination de ligne droite la plus longue soit parallèle à un côté plus long d'une image de la carte nouvelle destinée à être affichée sur un dispositif d'affichage d'un dispositif de terminal communiquant avec le dispositif de nettoyage se déplaçant de façon autonome.

2. Dispositif de nettoyage se déplaçant de façon autonome selon la revendication 1, dans lequel
l'unité de gestion de carte fait en sorte que la position de référence incluse dans la carte ancienne soit superposée sur la carte nouvelle, et, en utilisant la composante de ligne droite la plus longue incluse dans la carte ancienne en tant qu'axe prédéterminé, est en outre adaptée pour faire tourner, en utilisant une transformation affine, la composante de ligne droite la plus longue incluse dans la carte nouvelle pour qu'elle soit parallèle à la composante de ligne droite la plus longue incluse dans la carte ancienne, et
le dispositif de nettoyage se déplaçant de façon autonome comprend en outre :
un calculateur de différence qui cause le mouvement de la carte nouvelle tournée, le long de la direction d'axe X ou d'axe Y relativement à la carte ancienne, une ou plusieurs fois et est configurée pour calculer une différence entre la carte nouvelle et la carte ancienne à chaque fois que le mouvement est réalisé ; et
une unité de mise à jour de position de référence qui est adaptée pour mettre à jour la position de référence de la carte nouvelle sur la base d'une relation positionnelle de la position de référence de la carte nouvelle par rapport à la position de référence de la carte ancienne qui a fourni une différence minimum parmi des différences calculées dans le calculateur de différence.

3. Procédé de correction de carte pour un dispositif de nettoyage se déplaçant de façon autonome adapté pour se déplacer de façon autonome et réaliser un nettoyage, le procédé de correction de carte comprenant :
dans un générateur de carte, sur la base d'un historique de déplacement et en utilisant une position d'un élément de référence installé dans une zone destinée à être nettoyée en tant que position de référence, générer une carte ancienne et une carte nouvelle après que la carte ancienne est générée ;
dans une unité de détermination de ligne droite la plus longue, déterminer une composante de ligne droite la plus longue qui est la plus longue parmi des composantes de ligne droite incluses dans chacune de la carte ancienne et de la carte nouvelle ; et
dans une unité de gestion de carte, faire tourner et agencer au moins la carte nouvelle et faire en sorte que la composante de ligne droite la plus longue incluse dans chacune de la carte ancienne et de la carte nouvelle soit parallèle à chaque autre ou un axe prédéterminé,
**caractérisé par**
ajuster, dans une unité de traitement, une inclinaison de la carte nouvelle en utilisant une position d'un élément de référence installé dans une zone destinée à être nettoyée en tant que position de référence pour faire en sorte que la composante de ligne droite la plus longue déterminée dans l'unité de détermination de ligne droite la plus longue soit parallèle à un côté plus long d'une image de la carte nouvelle destinée à être affichée sur un dispositif d'affichage d'un dispositif de terminal communiquant avec le dispositif de nettoyage se déplaçant de façon autonome.
